# EUROPÄISCHE PATENTSCHRIFT

(11) **EP 1 396 071 B1**
(45) Veröffentlichungstag und Bekanntmachung des Hinweises auf die Patenterteilung: **27.07.2005**
(21) Anmeldenummer: 02778860.3
(22) Anmeldetag: 16.05.2002
(51) Int. Cl.: H02M 3/335

(54) **SCHALTWANDLER**
SWITCHING CONVERTER
TRANSFORMATEUR DE COMMUTATION

(30) Priorität: 12.06.2001 AT 9142001
(43) Veröffentlichungstag der Anmeldung: 10.03.2004
(73) Patentinhaber: Siemens AG Österreich, 1210 Wien (AT)
(72) Erfinder: ECKL, Gerald, A-2123 Schleinbach (AT)
(74) Vertreter: Patentanwaltskanzlei Matschnig
(86) Internationale Anmeldenummer: PCT/AT2002/000150
(87) Internationale Veröffentlichungsnummer: WO 2002/101910

(56) Entgegenhaltungen:
- EP-A- 0 771 063
- DE-A- 10 058 080
- FR-A- 2 673 010
- US-B1- 6 205 035
- LAOUAMER ET AL: "A multi-resonant converter for non-contact charging with electromagnetic coupling" PROCEEDINGS OF THE IECON '97: 23RD. INTERNATIONAL CONFERENCE ON INDUSTRIAL ELECTRONICS, CONTROL, AND INSTRUMENTATION. NEW ORLEANS, NOV. 9 - 14, 1997, PROCEEDINGS OF IEEE IECON: INTERNATIONAL CONFERENCE ON INDUSTRIAL ELECTRONICS, CONTROL, AND INSTRUME, Bd. 2, 1997, Seiten 792-797, XP002145223 ISBN: 0-7803-3933-9

## Beschreibung

Die Erfindung bezieht sich auf einen Schaltwandler zum Umwandeln einer Eingangsspannung in eine Ausgangsspannung derselben Frequenz, oder umgekehrt, mit zumindest zwei von einer Ansteuerschaltung angesteuerten Schaltmitteln, welche die Eingangsspannung mit einer Schaltfrequenz periodisch an eine Primärwicklung eines Übertragers mit Luftspalt legen, wobei ein erstes Schaltmittel die Eingangsspannung periodisch unmittelbar an die Primärwicklung schaltet und ein zweites Schaltmittel die Sekundärwicklung mit dem Ausgang verbindet, welcher von einem Kondensator überbrückt ist, welcher als Speicherkondensator für die Schaltfrequenz dimensioniert ist. Eine derartige Vorrichtung ist aus der JP-A-2000333455 bekannt (s. Oberbegriff von Anspruch 1).

Will man eine übliche Wechselnetzspannung z. B. 230 V/50 Hz oder 120 V/60 Hz auf eine Ausgangsspannung gleicher Frequenz bei galvanischer Trennung umsetzen, verwendet man herkömmlicherweise und im einfachsten Fall einen Transformator. Bei sehr geringem Leistungen machen sich das Gewicht des Transformators bzw. dessen Kosten noch nicht sehr bemerkbar, bei höheren Leistungen wird jedoch der Aufwand für einen auf Netzfrequenz dimensionierten Übertrager ein ernst zu nehmendes Problem.

Nicht nur bei Schaltwandlern sondern ganz allgemein ist es bekannt, dass Volumen und Masse eines Übertragers bei Übergang auf höhere Frequenzen, z. B. von 50 Hz auf 30 kHz, erheblich verringert werden können. Andererseits existieren viele Lösungen, um aus einer Gleichspannung eine Wechselspannung mit Netzfrequenz zu erzeugen. Dazu wird nach dem Stand der Technik üblicherweise zweistufig vorgegangen, beispielsweise wie folgt:
In einer ersten Stufe wird mittels eines Hochsetzstellers aus der niedrigen Eingangsgleichspannung von 12 V eine Zwischenkreisspannung von 310 V erzeugt. Dazu verwendet man einen Sperr- oder Flusswandler mit Pulsweitenmodulation in einem Frequenzbereich oberhalb des Hörbereichs, z. B. 20 kHz, wobei eine Regelung auf konstante Zwischenkreisspannung erfolgt. Diese hohe Gleichspannung wird sodann mittels einer Vollbrücke umgerichtet, um die gewünschte Wechselspannung zu erhalten, wobei wieder eine Pulsweitenmodulation bei einer Schaltfrequenz von 20 kHz oder mehr verwendet wird. Die stufenförmige, dabei erhaltene Spannung bildet mit ihrer Einhüllenden die netzfrequente Ausgangsspannung. Es ist für den Fachmann einsichtig, dass dieses zweistufige Verfahren zwangsläufig zu höheren Verlusten und einem niedrigeren Wirkungsgrad führt. Man benötigt in beiden Wandlerstufen Induktivitäten, wobei in zumindest einer Stufe ein Transformator erforderlich ist, um die meist geforderte galvanische Trennung zwischen Ein- und Ausgang sicherzustellen. Zwar kann hier der Transformator billiger gebaut werden, da er mit einer höheren Frequenz betrieben wird, doch ist der übrige Aufwand hoch.

Ausgehend von den bekannten Lösungen zur Umwandlung einer Gleichspannung in eine netzfrequente Wechselspannung lässt sich ein z. B. 50 Hz/50 Hz-Wandler durch Vorschalten eines Gleichrichters vor einen oben beschriebenen Wandler schaffen. Diese komplexe Lösung erfordert nicht nur den zusätzlichen Gleichrichter, sondern auch einen teuren Glättungskondensator.

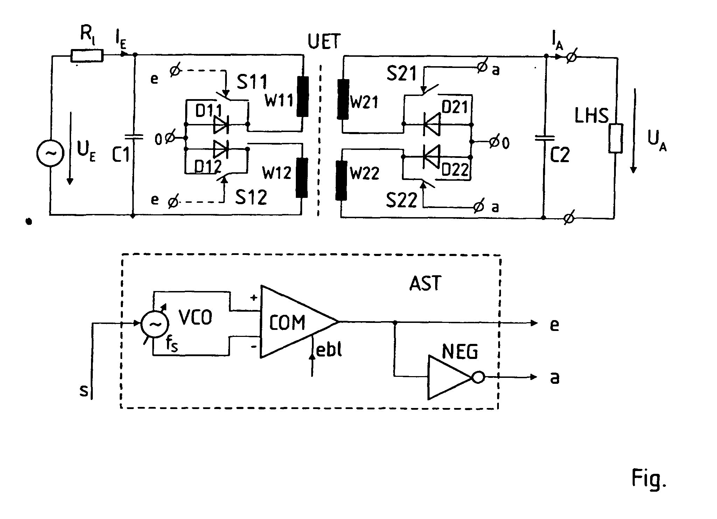

Aus der GB 2 301 239 A geht im Zusammenhang mit deren Fig. 10 ein bidirektionaler Schaltwandler als bekannt hervor, welcher dem Oberbegriff der unabhängigen Ansprüche entspricht. Bei diesem bekannten Schaltwandler wird die Eingangsspannung über Serienkondensatoren schon an die zugehörige Übertragerwicklung geschaltet, wobei insgesamt vier solche Kondensatoren vorhanden sind, welche einen Sternpunkt für die Wicklungen bilden. Primär- und sekundärseitig kommen je vier Schalter zur Anwendung, von welchen je zwei ständig eingeschaltet sind, wobei die primär- und sekundärseitigen Schalter gleichphasig schalten. In Serie mit der Primär/Sekundärwicklung können zusätzliche Induktivitäten vorgesehen werden, was offensichtlich für eine Regelung der Ausgangsspannung erforderlich ist.

Ein Gleichspannungs-/Gleichspannungs-Kondensator ist der US 6,205,035 B1 zu entnehmen. Dieser symmetrisch aufgebaute Konverter kann zwar bidirektional, jedoch nur in zwei von vier Quadranten arbeiten.

Aus der EP 0 771 063 A geht ein primärseitig symmetrisch aufgebauter Schaltwandler hervor, der eine Eingangswechselspannung nach Gleichrichtung in eine Ausgangsgleichspannung wandelt, wobei diese durch konventionelles Gleichrichten der Sekundärspannung eines Übertragers gewonnen wird.

Die meisten der oben angestellten Überlegungen gelten auch für Gleichspannungs-/Gleichspannungswandler, kurz DC/DC-Wandler genannt, und für Wechselsspannungs-/Gleichspannungswandler, kurz AC/DC-Wandler. Dazu existiert eine große Zahl von Lösungen auf Basis von Durchflusswandlern, Sperrwandlern oder Mischformen solcher Wandler. Bei DC/DC-Wandlem erfolgt sekundärseitig eine Gleichrichtung, bei AC/DC-Wandlern wird auch primärseitig zunächst eine Gleichrichtung vorgenommen.

So zeigt beispielsweise die US 5,473,530 einen pulsweitenmodulierten DC/AC-Wandler, welcher zwei Übertrager mit einer symmetrischen Anordnung von je zwei Primär- und Sekundärschaltern besitzt. Abgesehen von der kostspieligen Verwendung zweier Übertrager ist diese bekannte Wandlerschaltung auch nicht für einen AC/AC-Wandler einsetzbar.

Einen bidirektionalen DC/DC-Wandler zeigt die JP 2000 333 455 A, bei welchem je ein FET-Transistor als primärer bzw. sekundärer Schalter vorgesehen ist. Mit dieser Schaltung lässt sich jedoch kein AC/AC-Wandler realisieren, alleine schon deshalb, da hierzu bidirektional arbeitende gesteuerte Schalter erforderlich wären.

Eine Aufgabe der Erfindung liegt in der Schaffung eines Schaltwandlers, der bei galvanischer Trennung eine Eingangsspannung mit Netzfrequenz, worunter im allgemeinsten Fall auch eine Gleichspannung (Frequenz Null) zu verstehen ist, in eine Ausgangsspannung der selben Frequenz wandelt und der bei gutem Wirkungsgrad mit geringem Aufwand realisierbar ist.

Diese Aufgabe wird mit einem Schaltwandler der eingangs angegebenen Art erreicht, bei welchem erfindungsgemäß die Primärwicklung des einen Luftspalt aufweisenden Übertragers zwei Wicklungshälften aufweist, deren innere Anschlüsse über die Serienschaltung zweier gesteuerter, synchron schaltender Schalter verbunden sind, welche das erste Schaltmittel bilden, die Sekundärwicklung zwei Wicklungshälften aufweist, deren innere Anschlüsse über die Serienschaltung zweier gesteuerter, synchron schaltender Schalter verbunden sind, welche das zweite Schaltmittel bilden, das gegenphasig bezüglich des ersten Schaltmittels schaltet und der Eingang von einem Kondensator überbrückt ist, welcher als Speicherkondensator für die Schaltfrequenz dimensioniert ist.

Durch das hier angewendete Symmetrieprinzip können herkömmliche Halbleiterschalter ohne Nachteile verwendet werden, wobei Ansteuerschaltungen mit einfachem Aufbau verwendbar sind.

Die Verwendung eines Übertragers mit Luftspalt, somit die Anwendung des Sperrwandlerprinzips, vereinfacht den Gesamtaufwand gegenüber herkömmlichen Lösungen erheblich und vereint den Vorteil der galvanischen Trennung mit dem Erfordernis eines induktiven Speichers.

Eine besonders wichtige Variante der Erfindung zeichnet sich dadurch aus, dass Eingangs-und Ausgangsspannung netzfrequente Wechselspannungen sind und die Schaltfrequenz groß gegen die Netzfrequenz ist.

In der Praxis hat es sich als günstig erwiesen, wenn die gesteuerten Schalter Feldeffekttransistoren sind.

Eine einfache und für viele Anwendungen brauchbare Lösung zeichnet sich dadurch aus, dass die Ansteuerungsschaltung ein symmetrisches Rechtecksignal liefert.

Andererseits kann es durchaus ratsam sein, wenn die Ansteuerschaltung zur Erzeugung eines Ansteuersignals eingerichtet ist, das in Abhängigkeit von einem Steuersignal pulsweitenmoduliert ist. Auf diese Weise wird der Wandler auch den oft gestellten Anforderungen einer Regel- oder Steuerbarkeit gerecht.

Dies gilt auch, wenn die Schaltfrequenz in Abhängigkeit von einem der Ansteuerschaltung zugeführten Steuersignal änderbar ist.

Bei den beiden zuvor genannten Varianten der Erfindung kann mit Vorteil vorgesehen sein, dass das Steuersignal für die Ansteuerschaltung in Abhängigkeit von elektrischen Größen, wie Ausgangsspannung, Ausgangsstrom, Eingangsleistung, etc. zur Regelung oder Begrenzung dieser Größen erzeugt wird.

Bei praxisgerechten Lösungen hat es sich als zweckmäßig erwiesen, wenn die Schaltfrequenz in der Größenordnung von 100 kHz bis 1 MHz liegt.

Die Erfindung samt weiteren Vorteilen ist im folgenden an Hand eines Ausführungsbeispiels näher erläutert, das in der Zeichnung veranschaulicht ist. Diese zeigt eine "symmetrische" Ausführungsform der Erfindung samt einer dazugehörigen prinzipiellen Ansteuerschaltung,

In der Figur ist ein bidirektionaler Wandler nach der Erfindung in symmetrischer Ausführung dargestellt. Ein Übertrag UET besitzt eine Primärwicklung mit zwei Wicklungshälften W11, W12, sowie eine Sekundärwicklung, gleichfalls mit zwei Wicklungshälften W21, W22. Die äußeren Anschlüsse der primären Wicklungshälften W11, W12 liegen an einer Eingangsspannung U_{E}, z. B. einer Wechselspannung von 230 V mit Netzfrequenz f_{N} = 50 Hz. Der Leitungswiderstand ist hier mit R₂ eingezeichnet und ein Kondensator C1 überbrückt den Eingang des Wandlers. Der Übertrager UET besitzt einen Luftspalt und den hohen Schaltfrequenzen entsprechend üblicherweise einen Fenitkern.

Die inneren Anschlüsse der primären Wicklungshälften W11, W12 sind über die Serienschaltung zweier gesteuerter Schalter S11, S12 verbunden. Wenn diese Schalter beispielsweise als Sperrschicht-MOSFET-Elemente realisiert sind, was für die Figur angenommen sei, liegen parallel zu den eigentlichen Schaltelementen oder Schaltübergängen die solchen Bauteilen inhärenten antiparallelen Dioden D11, D12, die auch für die Funktion der Schaltung nach der Figur vorausgesetzt werden.

Die Steuereingänge der Schalter S11, S21 sind mit "e" bezeichnet, ein dazu gehöriger gemeinsamer Nullpunkt mit "0".

Für die Ansteuerung der Schalter S11, S12, welche ganz allgemein als primäres oder erstes Schaltmittel bezeichnet werden sollen, ist eine Ansteuerschaltung AST vorgesehen, die im einfachsten Fall ein symmetrisches Rechtecksignal liefert, mit welchem beide Schalter S11, S12 synchron geöffnet oder geschlossen werden.

Im vorliegenden Fall besteht die Ansteuerschaltung schematisiert aus einem in Abhängigkeit von einem Steuersignal in seiner Frequenz änderbaren Generator VCO, dessen Ausgangsspannung, die im allgemeinen sinusförmig ist, in bekannter Weise mittels eines Komparators COM in eine Rechteckspannung umgewandelt und den Steuereingängen e zugeführt wird. Ein "enable"-Eingang des Komparators COM ist mit "eb2" bezeichnet.

Sekundärseitig sind die Wicklungshälften W21, W22 des Übertragers UET völlig gleich geschaltet wie an der Primärseite, d. h. die inneren Anschlüsse der Wicklungshälften sind über gesteuerte Schalter S21, S22 und Dioden D21, D22 miteinander verbunden, wobei die Steuereingänge für die Schalter S21, S22 hier mit "a" bezeichnet sind, und die äußeren Anschlüsse der beiden sekundären Wicklungshälften W21, W22 an einem den Wandlerausgang überbrückenden Kondensator C2 liegen. Eine Last LAS ist hier als Widerstand eingezeichnet.

Auch die beiden sekundären Schalter S21, S22, die ganz allgemein als sekundäres oder zweites Schaltmittel bezeichnet werden sollen, werden von der Ansteuerschaltung AST angesteuert, jedoch genau gegenphasig zu dem primären Schaltmittel S11, S12. Wenn die Schalter S11 und S12 offen sind, müssen die Schalter S21 und S2 geschlossen sein, und umgekehrt. Dazu wird das Ausgangssignal des Komparators COM mittels eines Inverters oder Negators NEG invertiert und das invertierte Signal den sekundären Schaltern S21, S22 an ihren Steuereingängen "a" zugeführt.

Die Schaltfrequenz fs liegt zweckmäßigerweise im Bereich von 100 kHz bis 1 MHz, doch sind auch niedrigere Schaltfrequenzen bis zur oberen Grenze des Hörbereichs denkbar und möglich. Dabei sind die beiden Kondensatoren C1, C2 am Eingang und am Ausgang des Wandlers so dimensioniert, dass sie für Netzfrequenz, z. B. 50 Hz, "klein" sind, für die Schaltfrequenz z. B. 100 kHz jedoch "groß", d. h. bei Schaltfrequenz Speicherkondensatoren darstellen. Beispielsweise kann es sich bei diesen Kondensatoren um Folienkondensatoren mit Werten von 1 µF handeln. Durch diese Kondensatoren werden die Schaltimpulse und deren Oberwellen von Netz und Verbraucher weitgehend ferngehalten, was natürlich, je nach Anforderungen, weitere Entstörmittel auch induktiver Art nicht ausschließt.

Die in der Zeichnung schematisch dargestellte Ansteuerschaltung AST ist besonders einfach aufgebaut, bietet jedoch die Möglichkeit einer variablen Schaltfrequenz. Da mit steigender Schaltfrequenz eine höhere Leistung übertragen werden kann, bietet sich z. B. die Möglichkeit einer Regelung der Ausgangsleistung an, d. h. bei mehr Leistungsbedarf am Ausgang die Schaltfrequenz zu erhöhen.

Andererseits sind übliche Spannungs- und Stromregelungen über die Änderung des Tastverhältnisses möglich, und dem Fachmann sind viele hierzu geeignete Schaltungen bekannt. Anzumerken ist, dass bei Verwendung einer primär/sekundär-symmetrischen Schaltung bei einem Tastverhältnis von 1 : 1 die Ausgangsspannung U_{A} gleich der Eingangsspannung U_{E} ist. Die gezeigte Schaltung kann weiters bidirektional arbeiten, d. h. Eingang und Ausgang sind vertauschbar oder die Energierichtung kann umgekehrt werden.

Wenngleich die dargestellte Wandlerschaltung eine bevorzugte Ausführung ist, da sie auch eine "oben/unten" Symmetrie mit horizontaler Symmetrieachse besitzt, sind andere Varianten denkbar, sämtliche in Kombination mit verschiedenen Ansteuerschaltungen.

## Patentansprüche

1. Schaltwandler zum Umwandeln einer Eingangsspannung (U_{E}) in eine Ausgangsspannung (U_{A}) derselben Frequenz (f_{N}), oder umgekehrt, mit zumindest zwei von einer Ansteuerschaltung (AST) angesteuerten Schaltmitteln (S11, S12; S21, S22), welche die Eingangsspannung mit einer Schaltfrequenz (fs) periodisch an eine Primärwicklung (W1) eines Übertragers (UET) mit Luftspalt legen, wobei ein erstes Schaltmittel (S11, S12) die Eingangsspannung (U_{E}) periodisch unmittelbar an die Primärwicklung schaltet und ein zweites Schaltmittel (S21, S22) die Sekundärwicklung (W21, W22) mit dem Ausgang verbindet, welcher von einem Kondensator (C2) überbrückt ist, welcher als Speicherkondensator für die Schaltfrequenz dimensioniert ist,
**dadurch gekennzeichnet, dass**
die Primärwicklung (W1) des einen Luftspalt aufweisenden Übertragers zwei Wicklungshälften (W11, W12) aufweist, deren innere Anschlüsse über die Serienschaltung zweier gesteuerter, synchron schaltender Schalter (S11, S12) verbunden sind, welche das erste Schaltmittel bilden, die Sekundärwicklung (W2) zwei Wicklungshälften (W21, W22) aufweist, deren innere Anschlüsse über die Serienschaltung zweier gesteuerter, synchron schaltender Schalter (S21, S22) verbunden sind, welche das zweite Schaltmittel bilden, das gegenphasig bezüglich des ersten Schaltmittels schaltet und der Eingang von einem Kondensator (C1) überbrückt ist, welcher als Speicherkondensator für die Schaltfrequenz dimensioniert ist.

2. Schaltwandler nach Anspruch 1, **dadurch gekennzeichnet, dass** Eingangs- und Ausgangsspannung (U_{E}, U_{A}) netzfrequente Wechselspannungen sind und die Schaltfrequenz (f_{S}) groß gegen die Netzfrequenz (f_{N}) ist.

3. Schaltwandler nach Anspruch 1 oder 2, **dadurch gekennzeichnet, dass** die gesteuerten Schalter (S11, S12; S21, S22) Feldeffekttransistoren sind.

4. Schaltwandler nach einem der Ansprüche 1 bis 3, **dadurch gekennzeichnet, dass** die Ansteuerungsschaltung (AST) ein symmetrisches Rechtecksignal liefert.

5. Schaltwandler nach einem der Ansprüche 1 bis 4, **dadurch gekennzeichnet, dass** die Ansteuerschaltung (AST) zur Erzeugung eines Ansteuersignals eingerichtet ist, das in Abhängigkeit von einem Steuersignal pulsweitenmoduliert ist.

6. Schaltwandler nach einem der Ansprüche 1 bis 5, **dadurch gekennzeichnet, dass** die Schaltfrequenz (f_{S}) in Abhängigkeit von einem der Ansteuerschaltung (AST) zugeführten Steuersignal änderbar ist.

7. Schaltwandler nach Anspruch 5 oder 6, **dadurch gekennzeichnet, dass das** Steuersignal für die Ansteuerschaltung (AST) in Abhängigkeit von elektrischen Größen, wie Ausgangsspannung, Ausgangsstrom, Eingangsleistung, etc. zur Regelung oder Begrenzung dieser Größen erzeugt wird.

8. Schaltwandler nach einem der Ansprüche 1 bis 7, **dadurch gekennzeichnet, dass** die Schaltfrequenz (f_{S}) in der Größenordnung von 100 kHz bis 1MHz liegt.

## Claims

1. A switch mode converter for converting an input voltage (U_{E}) into an output voltage (U_{A}) of the same frequency (f_{N}), or vice versa, comprising at least two switching circuits (S11, S12; S21, S22) driven by a driver circuit (AST), which switching circuits periodically apply an input voltage at the switching frequency (f_{S}) to the primary winding (W1) of an air-spaced transformer (UET), a first switching circuit (S11, S12) applying the input voltage (U_{E}) periodically directly to the primary winding, whilst a second switching circuit (S21, S22) connects the secondary winding (W21, W22) to the output, which is bridged by a capacitor (C2) dimensioned as a storage capacitor at the switching frequency,
**characterized in that**
the primary winding (W1) of the air-cored transformer has two semi-windings (W11, W12), whose inner terminals are interconnected via a series connection of two controlled, synchronously switching switches (S11, S12) forming the first switching circuit, the secondary winding (W2) has two semi-windings (W21, W22), whose inner terminals are interconnected via a series connection of two controlled, synchronously switching switches (S21, S22) forming the second switching circuit form, which switches operate in opposite phase relatively to the first switching circuit and the input is bridged by a capacitor (C1) which is dimensioned as a storage capacitor at the switching frequency.

2. A switch mode converter as defined in claim 1, **characterized in that** the input and output voltages (U_{E}, U_{A}) are AC voltages at mains frequency and the switching frequency (f_{S}) is higher than the mains frequency (f_{N}).

3. A switch mode converter as defined in claim 1 or claim 2, **characterized in that** the controlled switches (S11, S12; S21, S22) are field effect transistors.

4. A switch mode converter as defined in any one of claims 1 to 3, **characterized in that** the driver circuit (AST) produces a symmetrical square wave.

5. A switch mode converter as defined in any one of claims 1 to 4, **characterized in that** the driver circuit (AST) is adapted to produce a drive signal which is pulse width modulated according to a control signal.

6. A switch mode converter as defined in any one of claims 1 to 5, **characterized in that** the switching frequency (f_{S}) can be varied according to a control signal that is fed to the driver circuit (AST).

7. A switch mode converter as defined in claim 5 or claim 6, **characterized in that** the control signal for the driver circuit (AST) is produced according to electrical levels, such as output voltage, output current, input power, etc. for controlling or limiting such levels.

8. A switch mode converter as defined in any one of claims 1 to 7, **characterized in that** the switching frequency f_{S} is of the order of magnitude of from 100 kHz to 1 MHz.

## Revendications

1. Convertisseur de commutation pour convertir une tension d'entrée (U_{E}) en une tension de sortie (U_{A}) de la même fréquence (f_{N}) ou inversement, comprenant au moins deux moyens de commutation (S11, S12 ; S21, S22) commandés par un circuit de commande (AST) qui appliquent la tension d'entrée avec une fréquence de commutation (f_{S}) périodiquement sur un bobinage primaire (W1) d'un transmetteur (UET) à entrefer, un premier moyen de commutation (S11, S12) appliquant la tension d'entrée (U_{E}) périodiquement directement sur le bobinage primaire et un deuxième moyen de commutation (S21, S22) reliant le bobinage secondaire (W21, W22) à la sortie qui est pontée par un condensateur (C2) dimensionné comme condensateur accumulateur pour la fréquence de commutation,
**caractérisé en ce que** le bobinage primaire (W1) d'un transmetteur avec entrefer présente deux moitiés de bobinage (W11, W12), dont les raccords intérieurs sont reliés par le montage en série de deux commutateurs (S11, S12) synchronisés commandés qui constituent le premier moyen de commutation, le bobinage secondaire (W2) présente deux moitiés de bobinage (W21, W22), dont les raccords intérieurs sont reliés par le montage en série de deux commutateurs (S21, S22) synchronisés commandés qui constituent le deuxième moyen de commutation qui commute en opposition de phase par rapport au premier moyen de commutation, et l'entrée est pontée par un condensateur (C1) dimensionné comme condensateur accumulateur pour la fréquence de commutation.

2. Convertisseur de commutation selon la revendication 1,
**caractérisé en ce que** les tensions d'entrée et de sortie (U_{E}, U_{A}) sont des tensions alternatives à la fréquence de secteur, et la fréquence de commutation (fs) est grande par rapport à la fréquence de secteur (f_{N}).

3. Convertisseur de commutation selon la revendication 1 ou 2,
**caractérisé en ce que** les commutateurs (S11, S12 ; S21, S22) commandés sont des transistors à effet de champ.

4. Convertisseur de commutation selon l'une quelconque des revendications 1 à 3,
**caractérisé en ce que** le circuit de commande (AST) délivre un signal rectangulaire symétrique.

5. Convertisseur de commutation selon l'une quelconque des revendications 1 à 4,
**caractérisé en ce que** le circuit de commande (AST) est installé pour générer un signal de commande à modulation d'impulsions en largeur en fonction d'un signal de commande.

6. Convertisseur de commutation selon l'une quelconque des revendications 1 à 5,
**caractérisé en ce que** la fréquence de commutation (f_{S}) est variable en fonction d'un signal de commande transmis au circuit de commande (AST).

7. Convertisseur de commutation selon la revendication 5 ou 6,
**caractérisé en ce que** le signal de commande pour le circuit de commande (AST) est généré en fonction de grandeurs électriques telles que la tension de sortie, le courant de sortie, la puissance d'entrée, etc. pour réguler ou limiter ces grandeurs.

8. Convertisseur de commutation selon l'une quelconque des revendications 1 à 7,
**caractérisé en ce que** la fréquence de commutation (f_{S}) est de l'ordre de 100 kHz à 1 MHz.
